# EUROPEAN PATENT APPLICATION

(11) **EP 4 442 933 A1**
(43) Date of publication of application: **09.10.2024**
(21) Application number: 23171562.4
(22) Date of filing: 04.05.2023
(51) Int. Cl.: E04H 4/16

(54) **ROBOT SWIMMING POOL CLEANER**

(30) Priority: 04.04.2023 CN 202310390757
(71) Applicant: Shenzhen Aiper Intelligent Co., Ltd, Shenzhen (CN)
(72) Inventor: Wang, Yang, Shenzhen (CN); Yu, Xueliang, Shenzhen (CN); Wang, Keke, Shenzhen (CN)
(74) Representative: Zaboliene, Reda

(57) **Abstract**

The present application provides a robot swimming pool cleaner, and the robot swimming pool cleaner includes a housing (10) provided with a first chamber (21) and a second chamber (22). A filtering structure (30) is arranged between the first chamber and the second chamber, the first chamber is provided with a first water inlet (11), the second chamber is provided with a second water inlet (13) and a water outlet (12), the water outlet is provided with a water pumping device (40), one side of the second water inlet is rotatably equipped with a first movable door (50) with a first elastic member (52), the first elastic member is used to maintain a trend of the first movable door closing the second water inlet, and the housing is further internally provided with a sensing device (53) that may detect the rotation angle or applied torque of the first movable door. The present application detects the opening angle or applied torque of the first movable door by the sensing device, thereby the robot swimming pool cleaner is enabled to timely sense the situation of ineffective operation due to blockage, so that subsequent operations such as alarm prompt or fault self-processing are performed, as to solve a problem of existing swimming pool robots operating ineffectively for a long time while a water flow is severely blocked.

## Description

### Technical Field

The present application relates to the technical field of swimming pool cleaning devices, in particular to a robot swimming pool cleaner.

### Background

A swimming pool is a place where people engage in swimming exercise. During use of the swimming pool, there may be some garbage such as leaves, dust, grass, and hairs. Therefore, it is necessary to regularly clean the swimming pool. An existing robot swimming pool cleaner may perform swimming pool cleaning work, and it is usually provided with a cleaning mechanism and a garbage collecting mechanism. The cleaning mechanism may clean the bottom, walls and the like of the swimming pool, while the garbage collecting mechanism sucks water by a water pump and enables the pool water to pass through a filtering structure. The garbage in the pool water may be intercepted by the filtering structure and collected in a garbage bin.

The robot swimming pool cleaner with this working mode has such problems: while the amount of inhaled garbage is accumulated to a certain extent or some garbage completely covers the surface of the filtering structure, the water absorption and filtering ability of the robot may be greatly reduced, and the function of cleaning the pool water may not be achieved if it continues to work. Therefore, the robot swimming pool cleaner also needs to achieve the effect of detecting the degree of blockage in the garbage bin and filtering structure, and timely find the situation of ineffective filtration due to blockage, and subsequent operations such as shutdown or automatic garbage disposal are performed, thus the work efficiency and intelligence degree of the robot swimming pool cleaner are effectively improved.

### Summary

Therefore, the present application provides a robot swimming pool cleaner capable of detecting the degree of blockage in a garbage bin and a filtering structure.

A technical scheme of the present application is as follows: a robot swimming pool cleaner, including: a housing, herein the housing is internally provided with a first chamber and a second chamber, the first chamber and the second chamber are communicated with each other, the housing is provided with a first water inlet, a second water inlet and a water outlet, the first water inlet is used to communicate the exterior of the housing with the first chamber, and the second water inlet and the water outlet are used to communicate the exterior of the housing with the second chamber; a filtering structure, arranged between the first chamber and the second chamber, herein the filtering structure is used to intercept garbage in water and allow clean water to pass through; a water pumping device, arranged at the water outlet, and used to pump the water from the second chamber to the exterior of the housing;a first movable door, fixedly connected with a rotating shaft,herein the rotating shaft is rotatably mounted on a side wall of the second water inlet, and the first movable door may close the second water inlet, and may only rotate in the direction of the second chamber; a first elastic member, arranged on the first movable door, and used to maintain a trend of the first movable door closing the second water inlet; and a sensing device, used to detect the rotation angle of the rotating shaft or the torque applied to the rotating shaft.

Optionally, the sensing device is a Hall angle sensor, and the Hall angle sensor is used to detect the rotation angle of the rotating shaft.

Optionally, the sensing device is a torque sensor, and the torque sensor is sealed and arranged on the rotating shaft, and used to detect the torque applied to the rotating shaft.

Optionally, the first water inlet is provided with an anti-backflow device, and the anti-backflow device is used to prevent the garbage in the first chamber from going out of the first water inlet.

Optionally, the anti-backflow device includes a second movable door and a second elastic member, the second movable door is rotatably connected to a side wall of the first water inlet, and the second elastic member is connected to the second movable door, and may maintain a trend of the second movable door closing the first water inlet.

Optionally,the cross-sectional area of the second water inlet is less than two-thirds of the cross-sectional area of the first water inlet.This design may make the first movable door more difficult to open than the second movable door, thereby the first movable door is effectively prevented from being opened before a water flow is blocked, resulting in the situation that the second movable door is closed early.

Optionally, the first movable door is a rectangular faceplate, and the rotating shaft is arranged on a long side of the rectangular faceplate. Compared to a scheme that the rotatingshaft is arranged on a short side of the first movable door, the rotatingshaft is located on the long side of the first movable door, so that it is more difficult to open the first movable door, thereby the first movable door is prevented from being openedbefore the water flow is blocked, resulting in the situation that the second movable door is closed early.

Optionally, the second water inlet is arranged on a chamber wall, away from the water outlet, of the second chamber. This arrangement makes the first movable door less affected by the water pumping device, and it may not be opened before a water flow channel composed of the first chamber and the filtering structure is blocked.

Optionally, the water pumping device includes a motor and an impeller, an output shaft of the motor is connected to the impeller, the motor is sealed and arranged in the housing, and the impeller is arranged at the water outlet.

Optionally, the robot swimming pool cleaner further includes a controller, and the controller is electrically connected to the sensing device and the water pumping device.

The technical scheme of the present application has the following advantages: by rotatably mounting the first movable door with the first elastic member on one side of the second water inlet, the first movable door may be opened by the pool water after the water flow channel formed by connecting the first chamber and the filtering structure is blocked, thereby the sensing device detects the opening angle or the applied torque of the first movable door, so that the robot swimming pool cleaner may timely sense the situation of ineffective operation due to blockage, and operations such as alarm prompt or fault self-processing are performed, as to solve a problem of ineffective operation of an existing swimming pool robot for a long time while a water flow is severely blocked; and this scheme is simple and feasible, and has the advantages of high accuracy, good sensitivity, and low cost.

### Brief Description of the Drawings

In order to describe specific implementation modes of the present application or technical schemes in existing technologies more clearly, drawings used in descriptions for the specific implementation modes or the existing technologies are briefly introduced below. Apparently, the drawings in the following descriptions are some implementation modes of the present application. For those of ordinary skill in the art, other drawings mayalso be obtained according to these drawings without creative work.
Fig. 1 is a structure schematic diagram of a robot swimming pool cleaner in the present application; and
Fig. 2 is a flowchart of a blockage detection method for the robot swimming pool cleaner in the present application.

Explanation of reference signs in the drawings:
10-Housing; 11-First water inlet; 12-Water outlet; 13-Second water inlet; 21-First chamber; 22-Second chamber; 30-Filtering structure; 40-Water pumping device; 41-Motor; 42-Impeller; 50-First movable door; 51-Rotating shaft;52-first elastic member;53-sensing device; 60-Controller; 70-Anti-backflow device; and 71-Second movable door;; 72-second elastic member.

### Detailed Description of the Embodiments

The technical scheme of the present application is clearly and completely described below in combination with the drawings. Apparently, the described embodiments are a part of the embodiments of the present application, not all of the embodiments. Based on the embodiments in the present application, all other embodiments obtained by those of ordinary skill in the art without creative laborshall fall within the scope of protection of the present application.

In the description of the present application, it should be noted that the orientation or position relationship indicated by terms "center", "upper", "lower", "left", "right", "vertical", "horizontal", "inside", "outside" and the like is an orientation or position relationship based on the drawings, and is only for the convenience of describing the present application and simplifying the description, rather than indicates or implies that the device or element referred to must have a specific orientation, and be constructed and operated in the specific orientation. Therefore, it may not be understood as limitation to the present application. In addition, terms "first," "second," and "third" are only used for the purpose of the description, and may not be understood as indicating or implying relative importance.

In the description of the present application, it should be noted that unless otherwise specified and limited, terms "installation", "linkage", and "connection" should be understood broadly, for example, it may be a fixed connection, a detachable connection, or an integrated connection; it may be a mechanical connection, or an electrical connection; and it may be a direct connection, or an indirect connection by an intermediate medium, or it may be an internal communication between two elements. For those of ordinary skill in the art, the specific meanings of the above terms in the present application may be understood in specific circumstances.

In addition, technical features involved in the different implementation modes of the present application described below may be combined with each other as long as they do not conflict with each other.

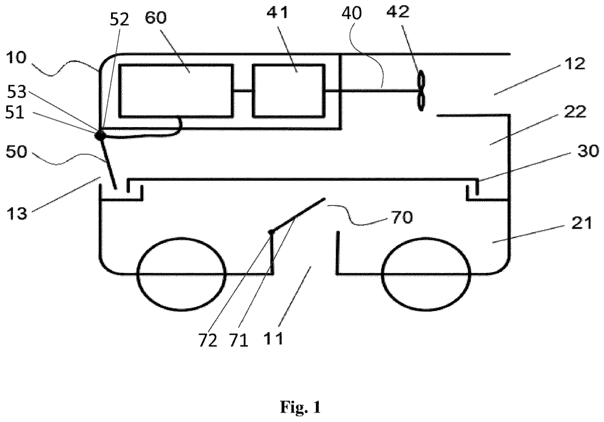

As shown in Fig. 1, a robot swimming pool cleaner, including: a housing 10, herein the housing 10 is internally provided with a first chamber 21 and a second chamber 22, the first chamber 21 and the second chamber 22 are communicated with each other, the housing 10 is provided with a first water inlet 11, a second water inlet 13 and a water outlet 12, the first water inlet 11 is used to communicate the exterior of the housing 10 with the first chamber 21, and the second water inlet 13 and the water outlet 12 are used to communicate the exterior of the housing 10 with the second chamber 22; a filtering structure 30, arranged between the first chamber 21 and the second chamber 22, herein the filtering structure 30 is used to intercept garbage in water and allow clean water to pass through; a water pumping device 40, arranged at the water outlet 12, and used to pump the water from the second chamber 22 to the exterior of the housing 10; a first movable door 50, fixedly connected with a rotating shaft 51, herein the rotating shaft 51 is rotatably mounted on a side wall of the second water inlet 13, and the first movable door 50 may close the second water inlet 13, and may only rotate in the direction of the second chamber 22; a first elastic member52, arranged on the first movable door 50, and used to maintain a trend of the first movable door 50 closing the second water inlet 13; and a sensing device 53, used to detect the rotation angle of the rotating shaft 51 or the torque applied to the rotating shaft 51.While the first movable door 50 fully closes the second water inlet 13, the rotating shaft 51 is located in an original position, and the rotation angle refers to an angle at which the rotating shaft 51 rotates relative to the original position.

While the above robot swimming pool cleaner works,the first chamber 21, the second chamber 22, the first water inlet 11, the second water inlet 13 and the water outlet 12 of the housing 10 should be located below the water level of a swimming pool. Firstly, the water pumping device 40 works to continuously discharge clean water from the second chamber 22 into the swimming pool, so that a negative pressure is produced in the second chamber 22, and the pool water is promoted to continuously enter the first chamber 21 from the first water inlet 11 and then enter the second chamber 22. At this moment, garbage enters the first chamber 21 with the pool water, and remains in the first chamber 21 due to the interception of the filtering structure 30, thus the cleaning of the pool water is achieved.In addition, at this moment, the first movable door 50 remains in a closed state due to the pressure of the water body inside the first elastic member 52and the second chamber 22. While there is more and more garbage in the first chamber 21 and/or some garbage covers the surface of the filtering structure 30, namely, while a water flow channel composed of the first chamber 21 and the filtering structure 30 is blocked by the garbage, since the pool water is blocked, the clean water flowing into the second chamber 22 becomes slow and less, and may not timely compensate for the reduced water pressure in the second chamber 22, so that the pressure of the water body inside the second chamber 22 and the first elastic member52 on the first movable door 50 is less than the pressure of the external pool water on the first movable door 50, and the first movable door 50 is opened towards the inner side of the second chamber 22. At this moment, the water enters the second chamber 22 from the second water inlet 13 and flows out through the water outlet 12, thus a new water flow path is formed. The present application utilizes this principle to detect that the first movable door 50 is opened at a certain angle or subjected to a certain torque by arranging the sensing device 53, and it is known that the robot swimming pool cleaner is already blocked, so that the robot swimming pool cleaner may timely sense the situation of ineffective operation due to blockage, and subsequent operations such as alarm prompt or fault self-processing are performed, as to solve a problem of existing swimming pool robots operating ineffectively for a long time while a water flow is severely blocked.

The sensing device 53 is used to detect the rotation angle of the rotating shaft 51 or the torque applied to the rotating shaft 51. Therefore, the sensing device 53 may choose an angle sensor to detect the rotation angle of the rotating shaft 51, or choose a torque sensor to detect the torque applied to the rotating shaft 51. Optionally, the sensing device 53 is a magnetic sensing angle sensor, and the magnetic sensing angle sensor includes a Hall sensor and a steel magnet. The steel magnet is arranged on the rotating shaft 51 of the first movable door 50, the Hall sensor is sealed and arranged on the housing 10, and the rotation of the rotating shaft 51 drives the steel magnet to rotate synchronously, so that a change in magnetic flux is sensed by the Hall sensor, thus the rotation angle of the rotating shaft 51 is detected. Optionally, the sensing device 53 is a rotational potentiometer, and the rotational potentiometer is sealed and arranged on the rotating shaft 51. While the rotating shaft 51 is rotated, an electric brush of the rotational potentiometer is driven to slide on a resistor body, and finally the rotation angle of the rotating shaft 51 may be obtained. Optionally, the sensing device 53 is a torque sensor, and the torque sensor is sealed and arranged on the rotating shaft 51 of the first movable door 50. While the rotating shaft 51 is rotated, the torque sensor detects the torque applied to the rotating shaft 51. In addition, the structure of the torque sensor may also achieve the function of the first elastic member52. Therefore, in this case, the first elastic member 52 may no longer be arrangedadditionally.

The water pumping device 40 includes a motor 41 and an impeller 42, an output shaft of the motor 41 is connected to the impeller 42, the motor 41 is sealed and arranged in the housing 10, and the impeller 42 is arranged at the water outlet 12. The water pumping device 40 drives the impeller 42 to rotate by the rotation of the motor 41, thereby the clean water of the second chamber 22 is discharged into the swimming pool, so that the second chamber 22 continuously produces the negative pressure, and the pool water carrying the garbage continuously enters the first chamber 21 from the first water inlet 11. While the water flow channel composed of the first chamber 21 and the filtering structure 30 is blocked to a certain extent by the garbage, the first movable door 50 may be opened under the pressure action of the pool water.

The second water inlet 13 is arranged on a chamber wall, away from the water outlet 12, of the second chamber 22. This arrangement makes the first movable door 50 less affected by the water pumping device 40, and it may not be opened before the water flow channel composed of the first chamber 21 and the filtering structure 30 is blocked.

An improved implementation mode of the present application is as follows: the first water inlet 11 is provided with an anti-backflow device 70, and the anti-backflow device 70 is used to prevent the garbage in the first chamber 21 from going out of the first water inlet 11. The anti-backflow device 70 includes a second movable door 71 and a second elastic member 72, the second movable door 71 is rotatably connected to a side wall of the first water inlet 11, the second elastic member 72 is connected to the housing 10 and the second movable door 70, and the second elastic member 72 is used to maintain a trend of the second movable door 70 closing the first water inlet 11.

In the improved implementation mode, preferably, the cross-sectional area of the second water inlet 13 is less than two-thirds of the cross-sectional area of the first water inlet 11, the first movable door 50 is a rectangular panel, and the rotating shaft 51 is arranged on a long side of the rectangular panel. After being verified, this design may make the first movable door 50 more difficult to open than the second movable door 70, thereby the first movable door 50 is effectively prevented from being opened before the water flow is blocked, resulting in the situation that the second movable door 70 is closed early.

The first elastic member 52 and the second elastic member 72 may be compression springs or other elastic bodies, one end of the first elastic member 52 is fixedly connected to the housing 10, and the other end is fixedly connected to the first movable door 50.

The robot swimming pool cleaner may further include a controller 60, and the controller 60 is electrically connected to the sensing device 53 and the water pumping device 40; and the mapping relationship between the rotation angle or the applied torque of the rotating shaft 51 and the degree of blockage in the water flow channel may be input into the controller 60, the sensing device 53 transmits the detected rotation angle or applied torque of the rotating shaft 51 to the controller 60, and the controller 60 determines the degree of blockage in the water flow channel according to the mapping relationship. In some implementation modes, the controller 60 is further electrically connected to an alarm device or a garbage disposal device, and a maximum value of the blockage degree is pre-set in the controller 60. While the controller 60 determines that the blockage degree obtained currently is greater than or equal to the maximum value, the controller 60 may control the water pumping device 40 to stop working, or control the alarm device to emit an alarm sound, or control the garbage disposal device to dispose the garbage.

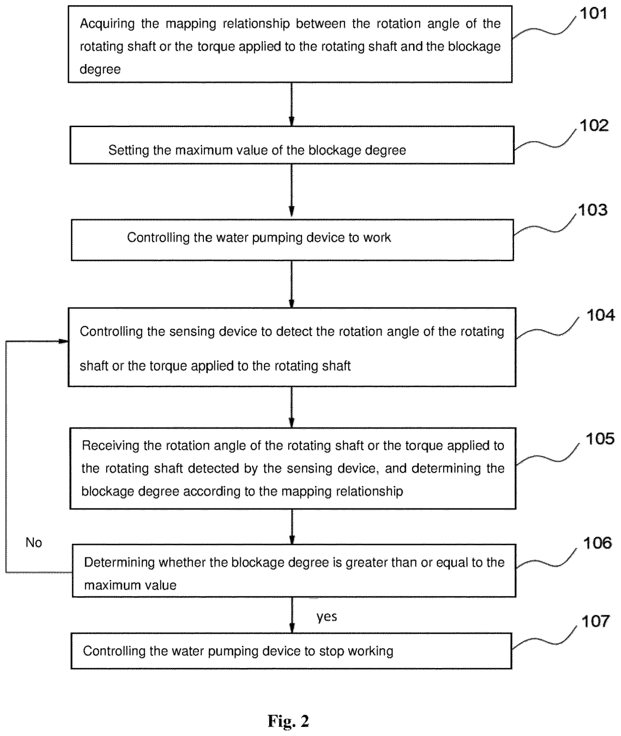

Referring to Fig. 2, a blockage detection method for the robot swimming pool cleaner of the present application includes the following steps.
Step 101, acquiring the mapping relationship between the rotation angle of the rotating shaft or the torque applied to the rotating shaft and the blockage degree of the robot swimming pool cleaner;
Step 102, setting the maximum value of the blockage degree;
Step 103, controlling the operation of the water pumping device;
Step 104, controlling the sensing device 53 to detect the rotation angle of the rotating shaft or the torque applied to the rotating shaft in real time;
Step 105, receiving the rotation angle of the rotating shaft or the torque applied to the rotating shaft detected by the sensing device 53, and determining the blockage degree of the robot swimming pool cleaner according to the mapping relationship;
Step 106, determining whether the blockage degree is greater than or equal to the maximum value, if so, performing the Step 107, and if not, returning to the Step 104; and Step 107, controlling the water pumping device to stop running.

While the robot swimming pool cleaner includes the controller, the controller is used to execute the blockage detection method.

Apparently, the above embodiments are only for the purpose of clearly describing examples provided, rather than limiting the implementation modes. For those of ordinary skill in the art, different forms of changes or variations may also be made on the basis of the above descriptions. It is not necessary and may not be exhaustive of all implementation modes here. The apparentchanges or variations arising from this are still within the scope of protection of the present application.

## Claims

1. A robot swimming pool cleaner, comprising:
a housing, wherein the housing is internally provided with a first chamber and a second chamber, the first chamber and the second chamber are communicated with each other, the housing is provided with a first water inlet, a second water inlet and a water outlet, the first water inlet is used to communicate the exterior of the housing with the first chamber, and the second water inlet and the water outlet are used to communicate the exterior of the housing with the second chamber;
a filtering structure, arranged between the first chamber and the second chamber, and used to intercept garbage in water and allow clean water to pass through;
a water pumping device, arranged at the water outlet, and used to pump the water from the second chamber to the exterior of the housing;
a first movable door, fixedly connected with a rotating shaft, wherein the rotating shaft is rotatably mounted on a side wall of the second water inlet, and the first movable door can close the second water inlet, and can only rotate in the direction of the second chamber;
a first elastic member, arranged on the first movable door, and used to maintain a trend of the first movable door closing the second water inlet; and
a sensing device, used to detect the rotation angle of the rotating shaft or the torque applied to the rotating shaft.

2. The robot swimming pool cleaner as claimed in claim 1, wherein the sensing device is a Hall angle sensor, and the Hall angle sensor is used to detect the rotation angle of the rotating shaft.

3. The robot swimming pool cleaner as claimed in claim 1, wherein the sensing device is a torque sensor, and the torque sensor is sealed and arranged on the rotating shaft, and used to detect the torque applied to the rotating shaft.

4. The robot swimming pool cleaner as claimed in claim 1, wherein the first water inlet is provided with an anti-backflow device, and the anti-backflow device is used to prevent the garbage in the first chamber from going out of the first water inlet.

5. The robot swimming pool cleaner as claimed in claim 4, wherein the anti-backflow device comprises a second movable door and a second elastic member, the second movable door is rotatably connected to a side wall of the first water inlet, and the second elastic member is connected to the second movable door, and can maintain a trend of the second movable door closing the first water inlet.

6. The robot swimming pool cleaner as claimed in claim 5, wherein the cross-sectional area of the second water inlet is less than two-thirds of the cross-sectional area of the first water inlet.

7. The robot swimming pool cleaner as claimed in claim 5 or 6, wherein the first movable door is a rectangular faceplate, and the rotating shaft is arranged on a long side of the rectangular faceplate.

8. The robot swimming pool cleaner as claimed in claim 1, wherein the second water inlet is arranged on a chamber wall, away from the water outlet, of the second chamber.

9. The robot swimming pool cleaner as claimed in claim 1, wherein the water pumping device comprises a motor and an impeller, an output shaft of the motor is connected to the impeller, the motor is sealed and arranged in the housing, and the impeller is arranged at the water outlet.

10. The robot swimming pool cleaner as claimed in claim 1, wherein the robot swimming pool cleaner further comprises a controller, and the controller is electrically connected to the sensing device and the water pumping device.
